# EUROPÄISCHE PATENTSCHRIFT

(11) **EP 1 337 877 B1**
(45) Veröffentlichungstag und Bekanntmachung des Hinweises auf die Patenterteilung: **29.04.2009**
(21) Anmeldenummer: 01995586.3
(22) Anmeldetag: 03.12.2001
(51) Int. Cl.: G01T 1/00

(54) **MEDIZINISCHE SONDE ZUR MESSUNG RADIOAKTIVER STRAHLUNG**
MEDICAL PROBE FOR MEASURING RADIOACTIVE RADIATION
SONDE M DICALE POUR MESURER LE RAYONNEMENT RADIOACTIF

(30) Priorität: 01.12.2000 DE 10061262; 26.06.2001 DE 10131413
(43) Veröffentlichungstag der Anmeldung: 27.08.2003
(73) Patentinhaber: W.O.M. World of Medicine AG, 10553 Berlin (DE)
(72) Erfinder: GÖBEL, Thomas, 12683 Berlin (DE); HUG, Olaf, 10825 Berlin (DE)
(74) Vertreter: Gross, Felix
(86) Internationale Anmeldenummer: PCT/DE2001/004594
(87) Internationale Veröffentlichungsnummer: WO 2002/044755

(56) Entgegenhaltungen:
- US-A- 4 550 381
- US-A- 5 218 208
- US-A- 5 744 805
- ENTINE G ET AL: "SURVEY OF CDTE NUCLEAR DETECTOR APPLICATIONS" NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, Bd. A283, Nr. 2, 1. November 1989 (1989-11-01), Seiten 282-290, XP000072534 ISSN: 0168-9002

## Beschreibung

Die vorliegende Erfindung betrifft eine medizinische Sonde zur Messung radioaktiver Strahlung nach dem Oberbegriff des Anspruchs 1.

Eine derartige medizinische Sonde zur Messung radioaktiver Strahlung mit einem in einer Hand haltbaren Gehäuse umfasst in diesem Gehäuse eine Detektoreinrichtung mit einer Halbleiterdiode zur Erzeugung von Signalen in Wechselwirkung mit einer der folgenden radioaktiven Strahlungen: α-, β⁺-, β-⁻ und y-Strahlung, eine Signal-Verarbeitungseinrichtung für die Weiterverarbeitung der von der Detektorvorrichtung erzeugten Signale und eine Energieversorgungseinrichtung für die Detektoreinrichtung und die Signal-Verarbeitungseinrichtung.

Aus der WO 97/42542 ist eine derartige medizinische Handsonde bekannt. Nachdem einem Patienten ein Radiopharmazeutikum verabreicht worden ist, ermöglicht die Sonde beispielsweise einem Chirurgen während eines operativen Eingriffes, nicht oder nur schwach radioaktiv markiertes Gewebe von radioaktiv markiertem Gewebe zu unterscheiden.

Nachteilig an der in der WO 97/42542 beschriebenen Handsonde ist jedoch, dass ein elektronischer beziehungsweise elektrooptischer Transceiver vorgesehen ist, um die mittels der Detektorvorrichtung der Sonde generierten Signale an eine externe Vorrichtung zu senden, die aus diesen Signalen eine Zählrate ermittelt und anzeigt.

Der vorliegenden Erfindung liegt daher die Aufgabe zugrunde, eine medizinische Handsonde zur Messung radioaktiver Strahlung bereitzustellen, die es als autarkes Messgerät ermöglicht, radioaktiv markiertes Gewebe zu vermessen.

Diese Aufgabe wird durch eine medizinische Sonde mit den Merkmalen des Anspruchs 1 gelöst.

Im Gehäuse ist eine Wiedergabeeinrichtung zur Wiedergabe der mittels der Signal-Verarbeitungseinrichtung verarbeiteten Signale angeordnet ist.

Durch die Kombination von Detektoreinrichtung, Signal-Verarbeitungseinrichtung, Wiedergabeeinrichtung und der zugehörigen Energieversorgung stellt die erfinderische medizinische Handsonde ein kompaktes, kabelloses, komplettes Messsystem dar, das ohne Zusatzgeräte die flexible intra- und extraoperative, lokale Messung von radioaktiv markiertem Gewebe ermöglicht.

Die Wiedergabeeinrichtung weist bevorzugt Mittel zur akustischen und/oder optischen Wiedergabe der verarbeiteten Signale und Messwerte auf. Damit kann ein Benutzer die Messung während der Arbeit in einfacher Weise genau verfolgen.

Erfindungsgemäß ist die gesamte Signal-Verarbeitungseinrichtung in einen Stromsparmodus abschaltbar und die Energieversorgungseinrichtung weist ein Steuermittel auf, das die Detektoreinrichtung mit der für die Detektion der radioaktiven Strahlung benötigten stabilen Vorspannung versorgt, wobei die Versorgung mit dieser Vorspannung unabhängig vom Betriebszustand der Signal-Verarbeitungseinrichtung permanent gewährleistet ist.

In einer ersten Ausführungsform ist es dazu zweckmäßig, dass die Energieversorgungseinrichtung eine Spannungsquelle umfasst und das Steuermittel mit Hilfe einer Spannungswandlervorrichtung die benötigte Vorspannung der Detektoreinrichtung aus der Spannung der Spannungsquelle bereithält.

In einem zweiten Ausführungsbeispiel weist das Steuermittel der Energieversorgungseinrichtung eine Spannungsquelle für die Vorspannung der Detektoreinrichtung und die Energieversorgungseinrichtung eine mit der Spannungsquelle gekoppelte Spannungswandlervorrichtung auf, wobei die Spannungswandlervorrichtung aus der Spannung der Spannungsquelle die für die Signal-Verarbeitungseinrichtung benötigte Spannung bereitstellt.

In einem dritten, bevorzugten Ausführungsbeispiel weist die Energieversorgungseinrichtung eine erste Spannungsquelle für die Versorgung der Signal-Verarbeitungseinrichtung auf und die Steuermittel der Energieversorgungseinrichtung stellen die für die Detektoreinrichtung benötigte Vorspannung mittels einer zweiten separaten Spannungsquelle bereit. Eine derartige, der Detektoreinrichtung zugeordnete zweite Spannungsquelle lässt sich besonders einfach als kompakte Reihenschaltung einer Mehrzahl von Batterieelementen auszubilden.

Für sämtliche Ausführungsformen weist die Detektoreinrichtung bevorzugt einen Szintillatorkristall auf, der in bekannter Weise optisch an die Halbleiterdiode angekoppelt ist.

Es ist zweckmäßig, als Halbleiterdiode eine Si-Diode, eine AIIIBV-Halbleiter-Diode oder eine AIIBVI-Halbleiter-Diode vorzusehen.

Die Signal-Verarbeitungseinrichtung weist bevorzugt eine elektronische Diskriminatoreinrichtung zum selektiven Unterdrücken definierter Signale der Detektoreinrichtung auf. Dazu lässt sich eine Diskriminatorschwelle einstellen, so dass lediglich Signale mit Pegeln über der Detektionsschwelle die Generierung eines gewünschten Messwertes auslösen. Weiterhin ist es zweckmäßig, wenn die Diskriminatoreinrichtung eine einstellbare Hysterese aufweist. Das heißt, die Diskriminatorschwelle, die die Generierung des gewünschten Messwertes beendet, lässt sich auf einem niedrigeren Pegel als die auslösende Diskriminatorschwelle einstellen.

Zur Erzeugung des in der Dosimetrie weit verbreiteten Parameters einer Zählrate weist die Signal-Verarbeitungseinrichtung bevorzugt eine Zähleinrichtung auf. Dazu ermittelt die Zähleinrichtung aus den von der Diskriminatoreinrichtung gefilterten Detektorsignalen eine Zählrate. Ebenso ist es möglich, die Detektorsignale ohne deren Filterung durch eine Diskriminatorschaltung zur Bildung einer Zählrate heranzuziehen.

Zur Weiterverarbeitung und externen Speicherung von Messdaten, die die Signal-Verarbeitungseinrichtung generiert hat, ist es zweckmäßig, wenn die medizinische Sonde zusätzlich eine Übertragungseinrichtung zur drahtlosen Übertragung der Messdaten von der Sonde zu einer externen Empfangseinheit aufweist.

Weiterhin ist es vorteilhaft, dass die Signal-Verarbeitungseinrichtung den Energievorrat der Energieversorgungseinrichtung feststellt und überwacht. Diese Überwachung, die automatisch und / oder manuell aktivierbar ausgebildet ist, informiert einen Benutzer der Handsonde beispielsweise selbständig über einen bald notwendigen Tausch von Batterien beziehungsweise schaltet die Handsonde bei niedrigem Energievorrat selbständig und irreversibel in einen Sicherheitsmodus ab, um ein überraschendes Ausfallen der Messfunktion zu verhindern.

Das Gehäuse der Handsonde weist bevorzugt eine Eintrittsöffnung oder einen Eintrittsbereich für die zu messende radioaktive Strahlung auf, wobei der Halbleiterdetektor auf der Innenseite des Gehäuses benachbart zur Eintrittsöffnung beziehungsweise zum Eintrittsbereich angeordnet ist.

Es ist zweckmäßig, die Eintrittsöffnung beziehungsweise den Eintrittsbereich in radioaktive Messsonden in bekannter Weise mit einem Kollimator zu umgeben.

Das Gehäuse der Handsonde weist bevorzugt eine hinterschneidungsfreie Form auf und/oder ist aus mit bekannten medizinischen Sterilisationsverfahren sterilisierbar.

Das Gehäuse der Handsonde ist bevorzugt, ähnlich einem chirurgischen Gerät, derart langgestreckt ausgeformt, dass es mindestens von Daumen und Zeigefinger einer Bedienperson gehalten und in einem Auflagebereich auf dem Handrücken liegend ähnlich wie ein Schreibstift in einer einzigen Hand führbar ist.

Dazu ist es zweckmäßig, wenn die Einbaugruppen, wie Detektoreinrichtung, Signal-Verarbeitungseinrichtung, Energieversorgungseinrichtung und Wiedergabeeinrichtung derart im Gehäuse angeordnet und austariert sind, dass die Lage des Schwerpunktes der Handsonde bewirkt, dass die Gewichtskraft der Handsonde über den Auflagebereich des Gehäuses auf den Handrücken einer Bedienperson einwirkt.

Am Gehäuse der Handsonde ist eine mit der Signal-Verarbeitungseinrichtung gekoppelte Schalteinrichtung zur Einstellung und Steuerung der Handsonde angeordnet. Bevorzugt weist die Schalteinrichtung einen Folienschalter oder -taster mit einer Kunststoff- oder Metallfolie auf.

Es ist zweckmäßig, mindestens einen Folienschalter derart am Gehäuse anzuordnen, dass Zeigefinger und / oder Daumen einer Bedienperson beim Führen der Handsonde auf diesem Folienschalter zu liegen kommen. Dadurch ist es insbesondere möglich, dass eine Bedienperson an einem von ihr gewünschten Ort des zu untersuchenden Gewebes den zugehörigen Messwert der radioaktiven Strahlung ermittelt und durch Betätigung des Folienschalters speichert.

Es ist zweckmäßig, dass die Signal-Verarbeitungseinrichtung der Handsonde einen Mikrocontroller aufweist. Dieser Mikrocontroller steuert und überwacht die Signal-Verarbeitungseinrichtung, die Energieversorgungseinrichtung und die Wiedergabeeinrichtung.

Die Detektoreinrichtung und die zugehörige Signal-Verarbeitungseinrichtung sind bevorzugt derart ausgebildet, dass radioaktive Strahlung in einem Energiespektrum von 5 keV bis 511 keV optimal detektierbar ist.

Bevorzugte Ausführungsbeispiele der medizinischen Handsonde werden anhand der folgenden Zeichnungen erläutert.

Es zeigen:
- Figur 1 -: eine schematische Schnittansicht entlang der Längsachse der medizinischen Messsonde;
- Figur 2 -: eine perspektivische Außenansicht der medizinischen Sonde;
- Figur 3 -: eine Detailansicht der an der Spitze der Sonde angeordneten Detektoreinrichtung im Längsschnitt;
- Figur 4 -: ein Blockschaltbild der unterschiedlichen Baugruppen der medizinischen Sonde;
- Figur 5a -: das Blockschaltbild der Baugruppen eines ersten Ausführungsbeispiels der Handsonde;
- Figur 5b -: das Blockschaltbild der Baugruppen eines zweiten Ausführungsbeispiels der Handsonde;
- Figur 5c -: das Blockschaltbild der Baugruppen eines dritten Ausführungsbeispiels der Handsonde;
- Figur 6 -: ein detailliertes Blockschaltbild der Baugruppen einer Handsonde gemäß des dritten Ausführungsbeispieles aus Figur 5c;
- Figur 7 -: eine schematische Darstellung der Funktionsweise der Diskriminatoreinrichtung der Handsonde; und
- Figur 8 -: eine weitere Ausführungsform der Handsonde mit einer drahtlosen Übertragungseinrichtung zur Übertragung von Messwerten an eine externe Empfangsvorrichtung.

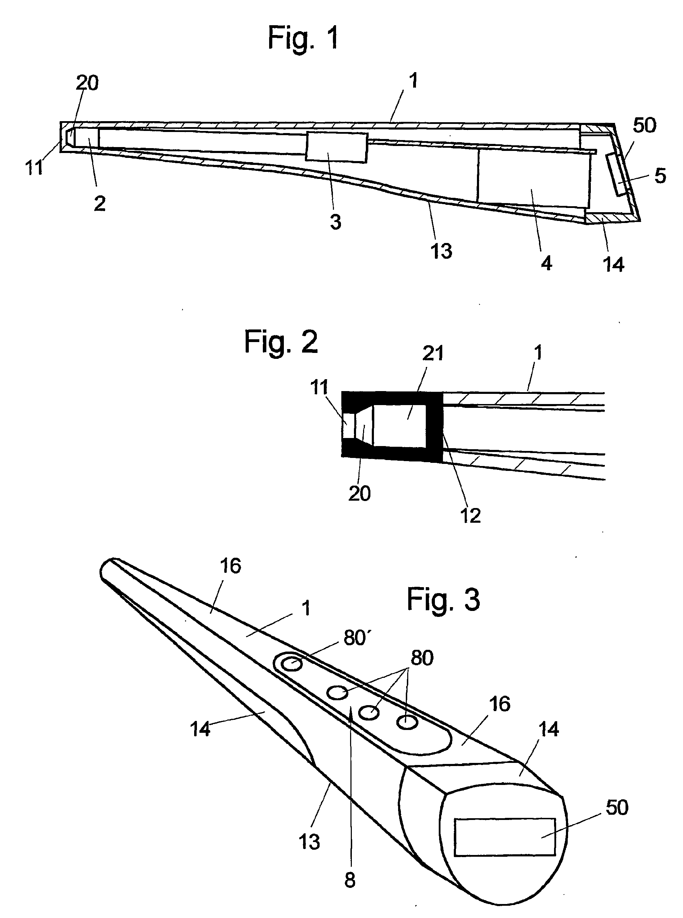

Figur 1 zeigt die medizinische Handsonde zur Strahlungsmessung in einer Längsschnittdarstellung. Das Gehäuse 1 verjüngt sich ausgehend von einem breiteren ersten Endbereich, wo es einen Verschlussdeckel 14 aufweist, entlang seiner Erstreckungsrichtung zu einem schlanken zweiten Endbereich. An der Spitze des zweiten, schlanken Endbereiches ist im Innern des Gehäuses 1 eine Detektoreinrichtung 2 mit einer Halbleiterdiode 20 angeordnet. Die Halbleiterdiode 20 ist hinter einem, integral in der schlanken Spitze des Gehäuses 1 angeordneten Eintrittsbereich 11 für die zu detektierende radioaktive Strahlung positioniert.

Ausgehend von der Detektoreinrichtung 2 ist in Richtung des sich erweiternden zweiten Endbereiches des Gehäuses 1 nacheinander eine Signal-Verarbeitungseinrichtung 3, eine Energieversorgungseinrichtung 4 und im Verschlussdeckel 14 eine Wiedergabeeinrichtung 5, die ein LCD-Display 50 aufweist, angeordnet. Die Wiedergabeeinrichtung umfasst weiterhin bevorzugt einen im Innern des Gehäuses 1 angeordneten Lautsprecher und zusätzlich zum LCD-Display 50 eine LED-Anzeige, um ermittelte Messwerte optische und akustisch wiederzugeben. Die Messwerte werden aus den Signalen der Detektoreinrichtung 2 gebildet, wobei diese Signale noch durch die Signal-Verarbeitungseinrichtung 3 noch verarbeitet werden.

Der Verschlussdeckel 14 lässt sich vom vorderen Gehäuseteil abnehmen, so dass dadurch der Zugriff auf das Innere des Gehäuses 1, insbesondere auf die Energieversorgungseinrichtung ermöglicht wird.

Das gesamte Gehäuse 1, d.h. das vordere langgestreckte Gehäuseteil und der Verschlussdeckel 14 ist aus Kunststoff oder Metall gefertigt, wobei der verwendete Werkstoff eine übliche medizinische Sterilisierung des Gehäuses 1 erlaubt. Im Interesse der Sterilisierbarkeit und Reinigung ist es insbesondere von Bedeutung, dass das Gehäuse 1 keinerlei Hinterschneidungen aufweist und die Fuge zwischen Verschlussdeckel 14 und dem vorderen sich verjüngenden Gehäuseteil möglichst schmal ausgebildet ist. Es ist jedoch ebenso denkbar, dass die Handsonde mit einem sterilen Überzug eingesetzt wird, der in angepasster Form die Bedienbarkeit der Sonde insbesondere die Ablesbarkeit des Displays 50 ermöglicht.

Mit einer Sonde, wie sie in Fig. 1 dargestellt ist, kann eine kompakte, kabellose Sonde geschaffen werden.

Unter dem Begriff kabellose Sonde ist zu verstehen, dass zwischen der Sonde und einer zugeordneten externen Einrichtung keine Verbindung in Form eines Kabels, einer Leitung oder beispielsweise einer Glasfaser insbesondere für die Energieversorgung der Sonde oder die Übertragung von Messdaten zwischen Sonde und der externen Einrichtung besteht. Diese Eigenschaft ist wichtig, da sich durch ein von der Sonde wegführendes Kabel unerwünschte Beschränkungen im Hinblick auf den Bewegungsradius und die Handhabbarkeit der Sonde ergäben. Die insbesondere von Chirurgen geforderte hohe Bedienerfreundlichkeit verlangt nach einer in einer Hand halt- und führbare Sonde, die im vorangehend beschriebenen Sinne kabellos ausgebildet ist.

Figur 2 zeigt eine vergrößerte Detailansicht eines Längsschnittes der Sondenspitze, in der die Detektoreinrichtung 2 positioniert ist, die die Halbleiterdiode 20 und einen Szintillatorkristall 21 umfasst. In der Gehäusespitze ist der Eintrittsbereich 11 für die zu detektierende radioaktive Strahlung ausgebildet. Der Eintrittsbereich 11 ist der Art der radioaktiven Strahlung entsprechend angepasst. Besonders für die Detektion von α-Strahlung muss das Gehäuse 1 im Eintrittsbereich 11 so dünn wie möglich ausgebildet sein, damit die Strahlung keine zu starke Dämpfung erfährt. Ebenso wäre es denkbar, anstelle einer integralen Ausbildung des Eintrittsbereiches 11 im Gehäuse 1 ein mit einer dünnen Metallfolie verschlossenes Eintrittsfenster vorzusehen.

Auf der Gehäuseinnenseite des Eintrittsbereiches 11 ist die Halbleiterdiode 20 angeordnet. Als Halbleiterdiode 20 sind abhängig von den Anforderungen insbesondere Silizium-PIN-Dioden, AIIIBV-Halbleiter- oder AIIBVI-Halbleiter-Dioden geeignet.

Um die Sensitivität insbesondere für höher energetische radioaktive Strahlung zu steigern, ist der Halbleiterdiode 20 der Szintillatorkristall 21 zugeordnet. Der Szintillator 21 muss dazu optisch an die Halbleiterdiode 20 gekoppelt sein. In Figur 2 ist der Szintillator 21 aus Sicht der durch den Eintrittsbereich 11 in das Gehäuse 1 einfallenden radioaktiven Strahlung der Halbleiterdiode 20 nachgeordnet. Ebenso wäre jedoch auch die umgekehrte geometrische Anordnung oder der Einsatz einer Mehrzahl Szintillatoren denkbar. Abhängig von den Parametern der zu detektierenden Strahlung stellen CsJ-, NaJ- oder BGO-Kristalle geeignete Szintillatoren dar.

Damit die Halbleiterdiode 20 zielgerichtet die durch den Eintrittbereich einfallende radioaktive Strahlung detektiert, ist es vorteilhaft, Halbleiterdiode 20 und Szintillator 21 mit einem Kollimator 12 zu umgeben. Der aus einem Metall mit einem hohen Absorptionskoeffizienten für radioaktive Strahlung (z.B. Wolfram) gefertigte Kollimator 12 umschließt Halbleiterdiode 20 und Szintillator 21 vollständig und lässt nur eine Öffnung, die dem Eintrittsbereich 11 benachbart ist.

Figur 3 zeigt eine perspektivische Ansicht des Gehäuses 1 der medizinischen Handsonde. Die zu Figur 1 identischen Bauelemente sind mit gleichen Bezugszeichen versehen. Ausgehend vom ersten, breiteren Endabschnitt des Gehäuses 1, der den Verschlussdeckel 14 mit dem darin angeordneten LCD-Display 50 aufweist, verjüngt sich das Gehäuse 1 hin zum zweiten, schmalen Endbereich des Gehäuses 1.

Das Gehäuse 1 verjüngt sich jedoch nicht symmetrisch zu seiner Längsachse. Es weist eine ebene Oberfläche 16 auf, die durch die sich verjüngende Form des Gehäuses im wesentlichen dreieckig ausgebildet ist. Im ersten, breiten Endabschnitt ist das Gehäuse 1 mit dem Verschlussdeckel 14 entlang des ersten Drittels der Längsachse der Sonde im wesentlichen in Form eines Kegelmantelausschnittes ausgebildet, der die beiden Längskanten der ebenen Oberfläche 16 verbindet. Dieser Kegelmantelausschnitt geht entlang der Sondenlängsachse bis zur Sondenspitze in eine sich kontinuierlich verjüngenden organisch ergonomischen Form mit zur Innenseite des Gehäuses weisenden Fingergriffmulden 14 über. Die Fingergriffmulden 14 erstrecken sich paarweise symmetrisch entlang der Sondenlängsachse an den beiden Flanken der Sonde.

Diese ergonomische Form des Gehäuses 1 ermöglicht es einer Benutzerperson, die medizinische Sonde ähnlich einem Schreibstift einhändig zu führen. Dabei ruht die Sonde mit einem in Blickrichtung zur Sondenspitze vor den Fingergriffmulden 14 angeordneten Auflagebereich 13 auf dem Handrücken der Hand der Bedienperson, wobei der Zeigefinger auf der ebenen Sondenoberfläche 16, der Daumen in der einen Fingergriffmulde 14 und der Mittelfinger in der anderen Fingergriffmulde 14 zu liegen kommen.

Dabei ist es besonders anwenderfreundlich, wenn der Schwerpunkt der medizinischen Sonde unweit des Auflagebereiches 13 angeordnet ist, so dass die Sonde auch ohne Fixierung durch die Finger einer Bedienperson auf dessen Handrücken liegend austariert ist.

Zur Bedienung der medizinischen Sonde sind auf der ebenen Oberfläche 16 eine Schalteinrichtung 8 mit Folienschaltern 80 angeordnet. Die Folienschalter- oder -taster mit einer Kunststoff- oder Metallfolie müssen die vorangehend beschriebenen Anforderungen der Sterilisierbarkeit ebenfalls erfüllen.

Mindestens ein Folienschalter 80' ist entlang der Längsachse der Sonde derart angeordnet, dass der Zeigefinger der Bedienperson, die die Sonde wie vorangehend beschrieben ähnlich einem Stift führt, auf diesem Folienschalter 80' zu liegen kommt. Durch Betätigung dieses Folienschalters 80' kann die Bedienperson.einen Messwert, der beispielsweise während einer Operation an einem definierten Gewebeabschnitt ermittelt wurde, in einem elektronischen Speicher der Signal-Verarbeitungseinrichtung 3 abspeichern und dem Display "einfrieren". Ebenso ist denkbar, einen Folienschalter in einer Fingergriffmulde 14 vorzusehen, so dass er mit dem Daumen betätigbar ist.

Die übrigen Folienschalter 80 sind im breiteren Endbereich der Sonde angeordnet, so dass Sie die Bedienperson in der vorangehend beschriebenen "Stifthaltung" der Sonde mit den Fingern nicht erreichen kann. Um diese Folienschalter bedienen zu können, muss die Bedienperson die Handsonde ähnlich einem Stab mit dem breiteren Ende nach oben halten. Dabei umgreift die Bedienperson den Auflagebereich 13 mit einer Handinnenfläche, und die Folienschalter 80 sind auf einfache Weise mit dem Daumen betätigbar.

Der Verschlussdeckel 14 weist ein derart zur ebenen Oberfläche 16 des Gehäuses 1 angeschrägt angeordnetes Display 50 auf, dass das Display 50 durch die Bedienperson auch in der vorangehend beschriebenen "Stabhaltung" bei einer Draufsicht auf die ebene Oberfläche 16 problemlos ablesbar ist. Es ist vorgesehen, dass eine Bedienperson die Voreinstellungen der Handsonde in der "Stabhaltung" mittels der Folientasten 80 kontrollieren und verändern kann.

Für den Messbetrieb wird eine Bedienperson die Handsonde üblicherweise in der "Stifthaltung" führen. Dabei ist die zur ebenen Oberfläche 16 gewandte Seite des Displays 50 die Oberseite für die angezeigten Messwerte. In der "Stabhaltung" ist es genau umgekehrt, die zur ebenen Oberfläche 16 gewandte Seite des Displays 50 ist die Unterseite für die auf dem Display 50 angezeigten Einstellungsparameter. Daher wird die Orientierung des Displays 50 um 180° gedreht, sobald die Bedienperson zwischen Messmodus und Einstellungsmodus wechselt. Diese Drehung der Displayanzeige stellt eine zusätzliche Sicherung für den Messbetrieb dar. Wenn die Bedienperson, die die Sonde für eine Messung in der "Stifthaltung" führt, den Einstellungsmodus zufällig durch das Betätigen der entsprechenden Folientaster 80 auslöst, wird die Anzeige des Displays gedreht, so dass das fehlerhafte Ablesen eines vermeintlichen Messwertes ausgeschlossen ist.

Durch die Kombination von Detektoreinrichtung, Signal-Verarbeitungseinrichtung, Energieversorgungseinrichtung und Wiedergabeeinrichtung im gemeinsamen Gehäuse einer medizinischen Handsonde, die aufgrund ihres vorangehend beschriebenen Aufbaus und ihrer geometrischen Gestalt eine vollständige Einhandbedienung ermöglicht, wird ein kabelloses autarkes medizinisches Messsystem für radioaktive Strahlung bereitgestellt. Dieses Messsystem ist ohne Zusatzgeräte zur sofortigen intra- und extraoperativen, lokalen Messung radioaktiver Strahlung geeignet.

Medizinische Sonden zur Messung radioaktiver Strahlung, die mit einer Batterie oder einem Akkumulator betrieben werden weisen oftmals den Nachteil auf, dass die Stromversorgung lediglich für einen Zeitraum einiger Dutzend Arbeitsstunden ausreicht. Der Betrieb derartiger Sonden erfordert ein zusätzliches Batterie- und Akkumanagement in den Kliniken, wobei das Risiko eines Geräteausfalls während der Operation nie gänzlich auszuschließen ist.
Es ist daher wünschenswert, die Zahl der pro Batterie bzw. Akkumulator möglichen Arbeitsstunden einer medizinischen Sonde zu maximieren, ohne dabei die Kapazität der elektrischen Energieversorgung erhöhen zu müssen. Es ist wünschenswert, dass das Batterie- bzw. Akkumanagement in der Klinik komplett entfällt, dadurch die Gerätebedienung vereinfacht und das Risiko eines unerwünschten Geräteausfalls verringert wird.

Insbesondere Sonden mit einer Halbleiterdiode als Strahlungsdetektor, haben den Nachteil, dass bei jedem erneuten Starten der Messfunktion der Handsonde aus einem Energiesparmodus heraus üblicherweise 20 bis 30 Sekunden bis zur Messbereitschaft der Sonde vergehen. Dies ist durch die resultierende Zeitkonstante der kapazitiven und ohmschen Bauelemente der Biasspannungsversorgung der Halbleiterdiode bedingt.

Eine "Anlaufphase" von 20 bis 30 Sekunden stellt für die Bedienperson der Handsonde insbesondere während eines chirurgischen Eingriffs eine lästige und daher unerwünschte Beschränkung dar.

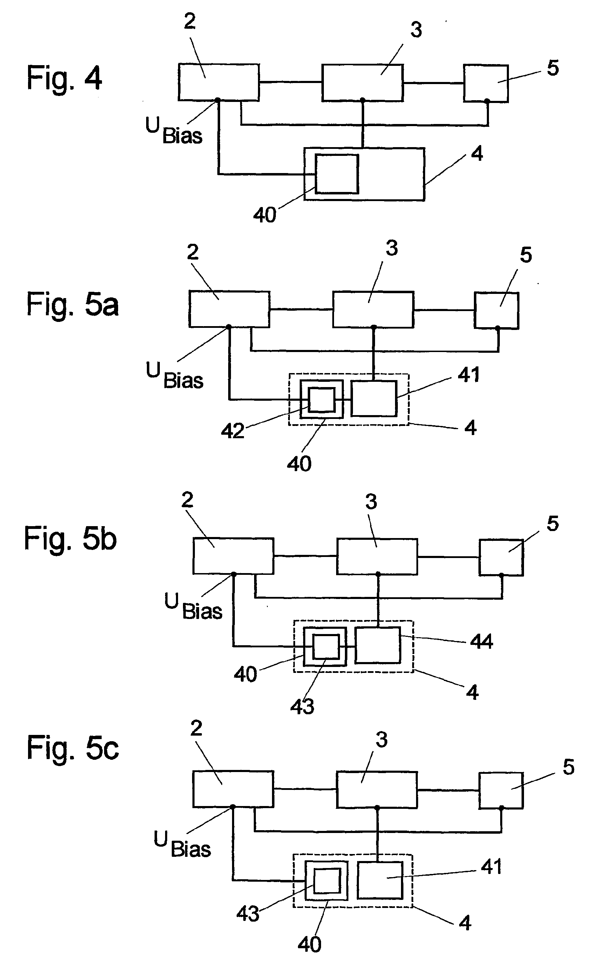

Figur 4 zeigt ein Blockschaltbild der unterschiedlichen Baugruppen der medizinischen Sonde. Die Energieversorgungseinrichtung 4 versorgt die Detektoreinrichtung 2, die Signal-Verarbeitungseinrichtung 3 und die Wiedergabeeinrichtung 5 mit elektrischer Energie (z.B. Batterie, Akku).

Die elektronischen Bauelemente Detektoreinrichtung 2, Signal-Verarbeitungseinrichtung 3 und Wiedergabeeinrichtung 5 weisen eine möglichst geringe Leistungsaufnahme auf, damit die Handsonde möglichst lang, ohne dass ein Wechsel von Batterien oder Akkus notwendig ist, einsetzbar ist. Solche Bauteile werden z.B. in der Mobilfunkttechnik eingesetzt und sind daher grundsätzlich bekannt.

Um möglichst sparsam mit der Energievorrat der Energieversorgungseinrichtung 4 umzugehen, ist die Signal-Verarbeitungseinrichtung in einen Energiesparmodus abschaltbar.

Weiterhin weist die Energieversorgungseinrichtung 4 Steuermittel 40 auf, die die Detektoreinrichtung 2 mit der für die Halbleiterdiode 20 benötigten Vorspannung U_{Bias} versorgen, wobei die Bereitstellung der Vorspannung U_{Bias} unabhängig vom Betriebszustand der Signal-Verarbeitungseinrichtung 3 durch die Steuermittel 40 gewährleistet ist.

Dadurch, dass die Halbleiterdiode 20 über ihre Vorspannung U_{Bias} eine im Vergleich zu den elektronischen Bauelementen der Signal-Verarbeitungseinrichtung 3 vernachlässigbar geringe Leistungsaufnahme aufweist, ist es nicht erforderlich, dass die Vorspannung U_{Bias} im Energiesparmodus der Handsonde abgeschaltet wird.

Dies hat den Vorteil, dass die Handsonde beim Aktivieren vom Energiesparmodus in den Messmodus innerhalb eines Zeitraumes von weniger als einer Sekunde messbereit ist. Wenn bei diesem Aktivieren die Vorspannung U_{Bias} ebenfalls erst eingeschaltet werden würde, so wäre die Messbereitschaft erst nach einem Zeitraum von 20 bis 30 Sekunden erreicht, weil die kapazitiven und ohmschen Bauelemente der Biasspannungsversorgung eine derart lange Anschaltzeit erzwingen.

Das vorangehend beschriebene Prinzip, dass die die Steuermittel 40 der Energieversorgungseinrichtung 4 die Halbleiterdiode 20 mit der Vorspannung U_{Bias} unabhängig vom Betriebszustand der Signal-Verarbeitungseinrichtung 3 versorgen lässt sich insbesondere mittels der drei im Folgenden beschriebenen Ausführungsbeispiele realisieren.

In Figur 5a ist das Blockschaltbild der Baugruppen eines ersten Ausführungsbeispiels der Handsonde dargestellt. Dabei weist die Energieversorgungseinrichtung 4 eine Spannungsquelle 41, die sich als Batterie oder Akkumulator ausbilden lässt, und das Steuermittel 40 eine Spannungswandlervorrichtung 42 auf, die mittels der Spannung der Spannungsquelle 41 die Vorspannung U_{Bias} generiert und der Halbleiterdiode der Detektoreinrichtung 2 bereitstellt.

In Figur 5b ist das Blockschaltbild der Baugruppen eines zweiten Ausführungsbeispiels der Handsonde gezeigt. Im Unterschied zu dem in Figur 5a gezeigten Ausführungsbeispiel weisen die Steuermittel 40 der Energieversorgungseinrichtung 4 eine Spannungsquelle 43 zur Bereitstellung der Vorspannung U_{Bias} auf. Die Spannung U_{Bias} wird somit z.B. nicht aus einer Batteriespannung umgewandelt sondern die Spannungsquelle 43 stellt U_{Bias} ohne Zwischenschaltung eines Spannungswandlers bereit.

Die Energieversorgungseinrichtung 4 umfasst weiterhin eine Spannungswandlervorrichtung 44, die aus der Spannungsquelle 43 der Steuermittel 40 die für den Messbetrieb der Detektoreinrichtung 2, der Signal-Verarbeitungseinrichtung 3 und der Wiedergabeeinrichtung 5 benötigte elektrische Energie bereitstellt.

Figur 5c zeigt das Blockschaltbild der Baugruppen eines dritten Ausführungsbeispiels der Handsonde. Hier weist die Energieversorgungseinrichtung 4 eine erste Spannungsquelle 41 für die Energieversorgung des Messbetriebes der Detektoreinrichtung 2, der Signal-Verarbeitungseinrichtung 3 und der Wiedergabeeinrichtung 5 auf und die Steuermittel 40 der Energieversorgungseinrichtung 4 umfasst eine zweite Spannungsquelle 43 zur Versorgung der Detektoreinrichtung 2 mit der Vorspannung U_{Bias}. Im Unterschied zu den in den Figuren 5a und 5b gezeigten Ausführungsbeispielen weist die Energieversorgungseinrichtung 4 zwei entkoppelte, separate Spannungsquellen 41 und 43 auf. Dieses Ausführungsbeispiel hat den Vorteil, dass die erforderliche Elektronik einer zusätzlichen Spannungswandlervorrichtung entfällt. Aufgrund der geringen Leistungsaufnahme der Halbleiterdiode 20 über die angelegte Vorspannung U_{Bias} hat die als Batterie oder Akkumulator ausgebildete Spannungsquelle 43 Standzeiten von mehreren Jahren. Außerdem lässt sie sich platz- und gewichtssparend beispielsweise als Reihenschaltung einzelner Batterieelemente ausbilden.

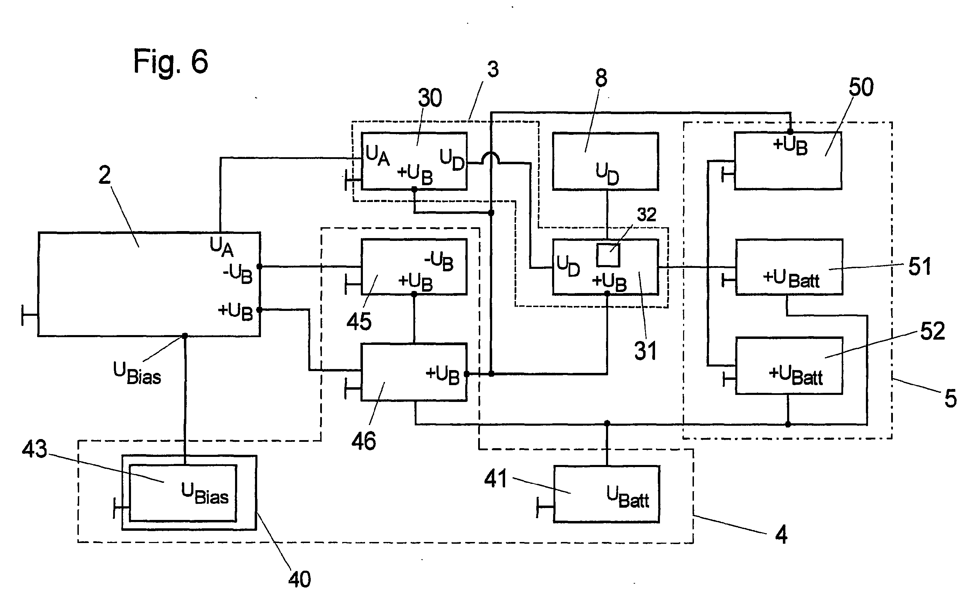

Figur 6 zeigt ein detailliertes Blockschaltbild der Baugruppen einer Handsonde gemäß des dritten Ausführungsbeispieles aus Figur 5c.

Die Energieversorgungseinrichtung 4, die die gestrichelt umrahmten Bauelemente aufweist, umfasst eine erste Spannungsquelle 41 mit zwei zugeordneten Spannungswandlern 45 und 46 zur Versorgung der Detektoreinrichtung 2, der Signal-Verarbeitungseinrichtung 3 mit der Diskriminatoreinrichtung 30, der Zähleinrichtung 31 mit Mikrocontroller 32 und der Bauelemente 50, 51, 52 der Wiedergabeeinrichtung 5 und die Steuermittel 40 mit einer zweiten Spannungsquelle 43 zur Versorgung der Detektoreinrichtung 2 mit der Vorspannung U_{Bias}. Die Spannungswandler 45 und 46 werden dazu benötigt, neben der von der zweiten Spannungsquelle 41 bereitgestellt Spannung U_{Batt} zwei weitere Potentiale +U_{B} und -U_{B} für die elektronischen Bauelemente bereitzustellen.

Die Detektoreinrichtung 2 ist mit beiden Potentialen -U_{B} und +U_{B} beschaltet und die bei der Detektion der radioaktiven Strahlung in der Halbleiterdiode der Detektorvorrichtung generierten analogen Spannungssignale U_{A} werden der Signal-Verarbeitungseinrichtung 3 zugeführt. Die Signal-Verarbeitungseinrichtung 3 weist strichpunktiert umrandet eine Diskriminatoreinrichtung 30 und eine Zähleinrichtung 31 mit einem Mikrocontroller 32 auf. In bekannter Weise kann eine zusätzliche Vorverstärkung der analogen Spannungspulse U_{A} vor Diskriminatoreinrichtung 30 vorgesehen sein.

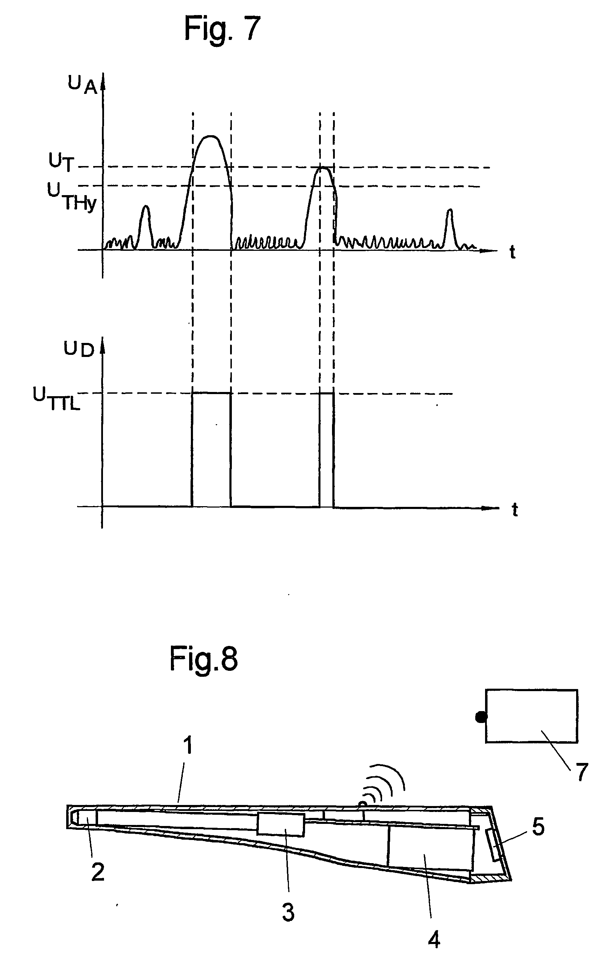

Aus analogen eingehenden Spannungspulsen, die eine einstellbare Diskriminatorschwelle überschreiten generiert die Diskriminatoreinrichtung 30, wie bei der nachfolgenden Beschreibung der Figur 7 dargestellt, digitale Ausgangspulse U_{D}, beispielsweise TTL-Pulse.

Die generierten digitalen Ausgangssignale U_{D} werden dem Mikrocontroller 32 zugeführt, der daraus mit Hilfe der Zähleinrichtung 31 eine Zählrate generiert, die sich mittels der Wiedergabeeinrichtung 5 als Messwert optisch und/oder akustisch wiedergeben lässt. In der dargestellten Ausführungsform ist der Mikrocontroller 32 als ein Teil der Zähleinrichtung 31 ausgebildet.

Die Wiedergabeeinrichtung 5 umfasst die strichpunktiert umrahmten Bauelemente einer LCD-Anzeige 50, eines Lautsprecher 51 und einer LED-Anzeige 52. Es ist vorgesehen, dass der mittels der Detektoreinrichtung 2 und der Signal-Verarbeitungseinrichtung 3 durchgeführte Messvorgang als Relativmessung der Dosis über den Lautsprecher 51 (Tonlautstärke und/oder Frequenz des Tons) und die LED-Anzeige 52 (Ausschlag einer LED-Anzeigesäule) und/oder als Relativmessung der Dosisleistung die ermittelte Zählrate in Form des Zahlenwertes auf dem Display 50 ausführbar ist.

Es ist eine mit dem Mikrocontroller 32 gekoppelte Tastatureinrichtung 8 vorgesehen die seitens der Bedienperson die Änderung der Voreinstellungen wie Art der Messung, Art der Wiedergabe des Messergebnisses, Einstellung der Diskriminatorschwelle etc. ermöglicht.

Der Mikrocontroller 32 ist als elektronisches "low power"-Bauelement ausgelegt, der die Bauelemente der Mess- und Steuerelektronik (Signal-Verarbeitungseinrichtung 3 und über die Energieversorgungseinrichtung 4 die Detektoreinrichtung 2) nach einer vorgegebenen Zeit der Inaktivität in einen Stromsparmodus (Sleepmodus) versetzt. Der Mikrocontroller 32 übernimmt weiterhin die Überwachung des Ladezustands der Spannungsquellen 41 und 43 und signalisiert den erforderlichen Wechsel der jeweiligen Batterien bzw. Akkumulatoren. Weiterhin schaltet der Mikrocontroller 32 das Gerät noch vor Ausfall der Spannungsquellen 41 und 43 ab und verhindert die Wiederinbetriebnahme mit quasi leerer Batterie bzw. leerem Akkumulator.

Alternativ kann die in Figur 6 dargestellte Schaltung auch mit den Energieversorgungseinrichtungen 4 gemäß dem ersten oder zweiten Ausführungsbeispiel (Figur 5a und 5b) verwendet werden.

In Figur 7 ist eine schematische Darstellung der Funktionsweise der Diskriminatoreinrichtung 30 der Handsonde dargestellt.

Nur die analogen Eingangs-Signalpulse U_{A}, die die einstellbare Diskriminatorschwelle U_{T} gerade erreichen oder überschreiten generieren die ansteigende Flanke eines digitalen Ausgangspulses U_{D}. Die abfallende Flanke des digitalen Ausgangspulses U_{D} wird generiert, wenn die abfallende Flanke des registrierten analogen Signalpulses die einstellbare Schwelle U_{THy} unterschreitet. Dadurch, dass die Pegelschwelle U_{THy} für die abfallende Flanke des generierten digitalen Ausgangspulses U_{D} unterhalb der Diskriminatorschwelle U_{T} einstellbar ist, weist die Diskriminatoreinrichtung 30 eine einstellbare Hysterese auf.

Die Diskriminatoreinrichtung 30 gewährleistet zusammen mit dem Einsatz eines in Figur 2 dargestellten Kollimators 12 eine Unterdrückung des auftretenden Rauschens und der Streustrahlung.

Es ist zweckmäßig, Detektoreinrichtung 2 und Signal-Verarbeitungseinrichtung 3 auf das Energiespektrum der zu detektierenden Strahlung hin zu optimieren. Grundsätzlich liegt diese im Bereich von 5keV bis 511keV. Die Handsonde lässt sich insbesondere für die Anwendung von Radiopharmaka im Bereich von ^{99m}Tc (140keV) bis ¹³¹I (364keV) ausbilden.

Figur 8 ist dargestellt, dass sich jede der vorangehend beschriebenen Handsonden zusätzlich mit einer drahtlosen Übertragungseinrichtung 6 zur Übertragung von Messwerten an eine externe Empfangsvorrichtung 7 ausbilden lässt. Dazu eignen sich aus dem Stand der Technik bekannte Übertragungseinrichtungen, die die digitalen Messsignale beispielsweise in Form infraroter optischer Pulse oder elektromagnetischer Strahlung an eine externe Empfangsvorrichtung übertragen.

## Patentansprüche

1. Medizinische Sonde zur Messung radioaktiver Strahlung mit einem in einer Hand haltbaren Gehäuse (1), darin angeordnet:
- mindestens eine, eine Halbleiterdiode (20) umfassende Detektoreinrichtung (2) zur Erzeugung von Signalen in Welchselwirkung mit mindestens einer der folgenden radioaktiven Strahlungen: α-, β⁺-, β⁻- und γ-Strahlung,
- eine Signal-Verarbeitungseinrichtung (3) für die Weiterverarbeitung der von der Detektoreinrichtung (2) erzeugten Signale,
- eine Energieversorgungseinrichtung (4) für die Detektoreinrichtung (2) und die Signal-Verarbeitungseinrichtung (3), und
- eine Wiedergabeeinrichtung (5) zur Wiedergabe der mittels der Signal-Verarbeitungseinrichtung (3) verarbeiteten Signale,
**dadurch gekennzeichnet,**
**dass** die Signal-Verarbeitungseinrichtung (3) einen Stromsparmodus aufweist und die Energieversorgungseinrichtung (4) ein Steuermittel (40) zur Bereitstellung einer für die Detektion der radioaktiven Strahlung benötigten stabilen Vorspannung (U_{Bias}) der Detektoreinrichtung (2) aufweist, wobei die Bereitstellung der Vorspannung (U_{Bias}) unabhängig vom Betriebszustand der Signal-Verarbeitungseinrichtung (3) ist.

2. Medizinische Sonde gemäß Anspruch 1, **gekenntzeichnet durch** eine Wiedergabeeinrichtung (5) zur optischen und/oder akustischen Wiedergabe der verarbeiteten Signale und/oder daraus abgeleiteter Messwerte.

3. Medizinische Sonde gemäß einem der Ansprüche 1 oder 2, **dadurch gekenntzeichnet, dass** die Energieversorgungseinrichtung (4) eine Spannungsquelle (41) aufweist und das Steuermittel (40) eine Spannungswandlervorrichtung (42) aufweist, die die benötigte Vorspannung der Detektoreinrichtung (2) mittels der Spannungsquelle (41) bereitstellt.

4. Medizinische Sonde gemäß einem der vorstehenden Ansprüche, **dadurch gekennzeichnet, dass** das Steuermittel (40) der Energieversorgungseinrichtung (4) eine Spannungsquelle (43) aufweist und die Energieversorgungseinrichtung (4) eine mit der Spannungsquelle (43) gekoppelten Spannungswandlervorrichtung (44) zur Bereitstellung der für die Signal-Verarbeitungseinrichtung (3) benötigten Spannung aufweist.

5. Medizinische Sonde gemäß einem der vorstehenden Ansprüche, **dadurch gekennzeichnet, dass** die Energieversorgungseinrichtung (4) eine erste Spannungsquelle (41) für die Signal-Verarbeitungseinrichtung (3), die Wiedergabeeinrichtung (5) und die Detektoreinrichtung (2) aufweist und die Steuermittel (40) der Energieversorgungseinrichtung (4) eine zweite Spannungsquelle (43) zur Bereitstellung der Vorspannung für die Detektoreinrichtung (2) aufweisen.

6. Medizinische Sonde gemäß Anspruch 5, **dadurch gekennzeichnet, dass** die der Detektoreinrichtung (2) zugeordnete zweite Spannungsquelle (43) eine Reihenschaltung einzelner Batterieelemente aufweist.

7. Medizinische Sonde gemäß einem der vorangehenden Ansprüche, **dadurch gekennzeichet, dass** die Detektoreinrichtung (2) einen Szintillatorkristall (21) umfasst, der mit der Halbleiterdiode (20) optisch gekoppelt ist.

8. Medizinische Sonde gemäß einem der vorangehenden Ansprüche, **dadurch gekennzeichnet, dass** die Halbleiterdiode (20) als Si-Diode, als AIIIBV-Halbleiter-Diode oder als AIIBVI-Halbleiter-Diode ausgebildet ist.

9. Medizinische Sonde gemäß einem der vorangehenden Ansprüche, **dadurch gekennzeichnet, dass** die Signal-Verarbeitungseinrichtung (3) eine elektronische Diskriminatoreinrichtung (30) für die Signale der Detektoreinrichtung (2) umfasst.

10. Medizinische Sonde gemäß Anspruch 9, **dadurch gekennzeichnet, dass** der Pegel der Diskriminatorschwelle (UT) der elektronischen Diskriminatoreinrichtung (30) einstellbar ist.

11. Medizinische Sonde gemäß Anspruch 10 **dadurch gekennzeichnet, dass** die Diskrininatorschwelle (UT) eine einstellbare Hysterese (UTHy) aufweist.

12. Medizinische Sonde gemäß einem der vorangehenden Ansprüche, **dadurch gekennzeichnet, dass** die Signal-Verarbeitungseinrichtung (3) eine Zähleinrichtung (31) für die Signale der Detektoreinrichtung (2) zur Erzeugung einer Zählrate aufweist.

13. Medizinische Sonde gemäß einem der Ansprüche 9 bis 11, **dadurch gekennzeichnet, dass** die Signal-Verarbeitungseinrichtung (3) eine Zähleinrichtung (31) aufweist, die aus den Signalen der Detektoreinrichtung (2), die nicht von der elektronischen Diskriminatoreinrichtung (30) unterdrückt werden, eine Zählrate bildet.

14. Medizinische Sonde gemäß einem der vorangehenden Ansprüche, **dadurch gekennzeichnet, dass** die Signal-Verarbeitungseinrichtung (3) aus den Signalen der Detektoreinrichtung (2) Messdaten generiert und die medizinische Sonde eine Übertragungseinrichtung (6) zur drahtlosen Übertragung der Messdaten von der medizinischen Sonde zu einer externen Empfangsvorrichtung (7) aufweist.

15. Medizinische Sonde gemäß einem der vorangehenden Ansprüche, **dadurch gekennzeichnet, dass** der Energievorrat der Energieversorgungseinrichtung (4) mittels der Signal-Verarbeitungseinrichtung (3) automatisch und/oder manuell ermittelbar und kontrollierbar ist.

16. Medizinische Sonde gemäß einem der vorangehenden Ansprüche, **dadurch gekennzeichnet, dass** das Gehäuse (1) eine Eintrittsöffnung oder einen Eintrittsbereich (11) für die radioaktive Strahlung aufweist, wobei die Halbleiterdiode (20) der Detektoreinrichtung (2) an der Eintrittsöffnung oder an dem Eintrittsbereich (11) angeordnet ist.

17. Medizinische Sonde nach Anspruch 16, **dadurch gekennzeichnet, dass** die medizinische Sonde einen, die Eintrittsöffnung oder den Eintrittsbereich (11) umschließenden Kollimator (12) aufweist.

18. Medizinische Sonde gemäß einem der vorangehenden Ansprüche, **dadurch gekennzeichnet, dass** das Gehäuse (1) eine hinterschneidungsfreie Geometrie aufweist.

19. Medizinische Sonde gemäß einem der vorhergehenden Ansprüche, **dadurch gekennzeichnet, dass** die Oberfläche des Gehäuses (1) mit üblichen medizinischen Sterilisationsverfahren sterilisierbar ist.

20. Medizinische Sonde nach einem der vorangehenden Ansprüche, **dadurch gekennzeichnet, dass** das Gehäuse (1) in einer langgestreckten Form derart ausgebildet ist, dass das Gehäuse (1) bei Benutzung der medizinischen Sonde in der Hand einer Bedienperson vom Handrücken der Hand in einem am Gehäuse befindlichen Auflagebereich (13) und mindestens von Daumen und Zeigefinger unterstützt wie ein Schreibstift haltbar ist.

21. Medizinische Sonde gemäß Anspruch 20, **dadurch gekennzeichnet, dass** der Schwerpunkt der medizinischen Sonde entlang seiner Erstreckungsachse auf Höhe des Auflagebereiches (13) des Gehäuses (1) angeordnet ist.

22. Medizinische Sonde gemäß einem der vorangehenden Ansprüche, **dadurch gekennzeichnet, dass** das Gehäuse (1) eine mit der Signal-Verarbeitungseinrichtung (3) gekoppelte Schalteinrichtung (8) zur Steuerung der medizinische Sonde aufweist.

23. Medizinische Sonde gemäß Anspruch 22, **dadurch gekennzeichnet, dass** die Schalteinrichtung (8) Folienschalter (80) mit einer Kunststoff- oder Metallfolie aufweisen.

24. Medizinische Sonde gemäß Anspruch 23, **dadurch gekennzeichnet, dass** mindestens ein Folienschalter (80) derart angeordnet ist, dass dieser mit dem Zeigefinger und/oder dem Daumen der Bedienperson betätigbar ist, insbesondere um einen ermittelten Messwert durch eine Hold-Funktion zu speichern.

25. Medizinische Sonde gemäß einem der vorangehenden Ansprüche, **dadurch gekennzeichnet, dass** die Signal-Verarbeitungseinrichtung (3) einen Mikrocontroller (32) zur Steuerung der Signal-Verarbeitungseinrichtung (3), zur Steuerung und Überwachung der Energieversorgungseinrichtung (4) und zur Steuerung der Wiedergabeeinrichtung (5) umfasst.

26. Medizinische Sonde gemäß einem der vorangehenden Ansprüche, **dadurch gekennzeichnet, dass** die Detektoreinrichtung (2) und die Signal-Verarbeitungseinrichtung (3) für die Detektion radioaktiver Strahlung im Bereich von 5 keV bis 511 keV optimiert ist.

## Claims

1. A medical probe for measuring radioactive radiation, having a housing (1) that can be held in one hand and in which there are arranged:
- at least one detector device (2), comprising a semiconductor diode (20), for generating signals interacting with at least one of the following radioactive radiations: α-, β⁺-, β⁻- and y-radiation,
- a signal processing device (3) for further processing the signals generated by the detector device (2),
- a power supply device (4) for the detector device (2) and the signal processing device (3), and
- a reproduction device (5) for reproducing the signals processed by means of the signal processing device (3),
**characterized**
**in that** the signal processing device (3) has a power saving mode, and the power supply device (4) has a control means (40) for providing a stable bias (U_{Bias}), required for detecting the radioactive radiation, of the detector device (2), the provision of the bias (U_{Bias}) being independent of the operating state of the signal processing device (3).

2. The medical probe as claimed in claim 1, **characterized by** a reproduction device (5) for the optical and/or acoustic reproduction of the processed signals and/or measured values derived therefrom.

3. The medical probe as claimed in one of claims 1 or 2, **characterized in that** the power supply device (4) has a voltage source (41), and the control means (40) has a voltage transformer device (42) that provides the required bias of the detector device (2) by means of the voltage source (41).

4. The medical probe as claimed in one of the preceding claims, **characterized in that** the control means (40) from the power supply device (4) has a voltage source (40), and the power supply device (4) has a voltage transformer device (44), coupled to the voltage source (43), for providing the voltage required for the signal processing device (3).

5. The medical probe as claimed in one of the preceding claims, **characterized in that** the power supply device (4) has a first voltage source (41) for the signal processing device (3), the reproduction device (5) and the detector device (2), and the control means (40) of the power supply device (4) have a second voltage source (43) for providing the bias for the detector device (2).

6. The medical probe as claimed in claim 5, **characterized in that** the second voltage source (43) assigned to the detector device (2) has a series circuit of individual battery elements.

7. The medical probe as claimed in one of the preceding claims, **characterized in that** the detector device (2) comprises a scintillator crystal (21) that is optically coupled to the semiconductor diode (20).

8. The medical probe as claimed in one of the preceding claims, **characterized in that** the semiconductor diode (20) is designed as an Si diode, as an AIIIBV semiconductor diode, or as an AIIBVI semiconductor diode.

9. The medical probe as claimed in one of the preceding claims, **characterized in that** the signal processing device (3) comprises an electronic discriminator device (30) for the signals of the detector device (2).

10. The medical probe as claimed in claim 9, **characterized in that** the level of the discriminator threshold (UT) of the electronic discriminator device (30) is adjustable.

11. The medical probe as claimed in claim 10, **characterized in that** the discriminator threshold (UT) has an adjustable hysteresis (UTHy).

12. The medical probe as claimed in one of the preceding claims, **characterized in that** the signal processing device (3) has a counting device (31) for the signals of the detector device (2) for the purpose of generating a counting rate.

13. The medical probe as claimed in one of claims 9 to 11, **characterized in that** the signal processing device (3) has a counting device (31) that forms a counting rate from the signals of the detector device (2) that are not suppressed by the electronic discriminator device (30).

14. The medical probe as claimed in one of the preceding claims, **characterized in that** the signal processing device (3) generates measured data from the signals of the detector device (2), and the medical probe has a transmission device (6) for the wireless transmission of the measured data from the medical probe to an external receiving device (7).

15. The medical probe as claimed in one of the preceding claims, **characterized in that** the energy store of the power supply device (4) can be determined automatically and/or manually and controlled by means of the signal processing device (3).

16. The medical probe as claimed in one of the preceding claims, **characterized in that** the housing (1) has an entry opening or an entry region (11) for the radioactive radiation, the semiconductor diode (20) of the detector device (2) being arranged at the entry opening or at the entry region (11).

17. The medical probe as claimed in claim 16, **characterized in that** the medical probe has a collimator (12) surrounding the entry opening or the entry region (11).

18. The medical probe as claimed in one of the preceding claims, **characterized in that** the housing (1) has a geometry free from undercuts.

19. The medical probe as claimed in one of the preceding claims, **characterized in that** the surface of the housing (1) can be sterilized with the aid of conventional medical sterilization methods.

20. The medical probe as claimed in one of the preceding claims, **characterized in that** the housing (1) is designed in an elongated form in such a way that during use of the medical probe the housing (1) can be held like a pen in the hand of an operator in a fashion supported by the back of the hand in a bearing region (13) located on the housing, and supported by at least thumb and index finger.

21. The medical probe as claimed in claim 20, **characterized in that** the centroid of the medical probe is arranged along its longitudinal axis at the level of the bearing region (13) of the housing (1).

22. The medical probe as claimed in one of the preceding claims, **characterized in that** the housing (1) has a switching device (8), coupled to the signal processing device (3), for controlling the medical probe.

23. The medical probe as claimed in claim 22, **characterized in that** the switching device (8) have [sic] membrane switches (80) with a plastic or metal membrane.

24. The medical probe as claimed in claim 23, **characterized in that** at least one membrane switch (80) is arranged in such a way that the latter can be actuated with the index finger and/or the thumb of the operator, in particular in order to store a determined measured value by means of a hold function.

25. The medical probe as claimed in one of the preceding claims, **characterized in that** the signal processing device (3) comprises a microcontroller (32) for controlling the signal processing device (3), for controlling and monitoring the power supply device (4), and for controlling the reproduction device (5).

26. The medical probe as claimed in one of the preceding claims, **characterized in that** the detector device (2) and the signal processing device (3) are optimized for detecting radioactive radiation in the range from 5 keV to 511 keV.

## Revendications

1. Sonde médicale servant à mesurer le rayonnement radioactif à l'aide d'un boîtier (1) pouvant être tenu dans une main, dans lequel sont disposés :
- au moins un dispositif de détection (2) comprenant une diode à semi-conducteur (2) servant à générer des signaux en interaction avec au moins un des rayonnements suivants : rayonnement a, β⁺, β⁻ et γ,
- un dispositif de traitement des signaux (3) servant à traiter des signaux générés par le dispositif de détection (2),
- un dispositif d'alimentation en énergie (4) pour le dispositif de détection (2) et le dispositif de traitement des signaux (3), et
- un dispositif de lecture (5) servant à lire les signaux traités à l'aide du dispositif de traitement (3),
**caractérisée en ce**
**que** le dispositif de traitement des signaux (3) possède un mode d'économie d'énergie et le dispositif d'alimentation en énergie (4) possède un élément de commande (40) servant à mettre à disposition une tension de polarisation stable (UBias) du dispositif de détection (2) nécessaire pour la détection du rayonnement radioactif, la mise à disposition de la tension de polarisation (UBias) est indépendante de l'état de fonctionnement du dispositif de traitement des signaux (3).

2. Sonde médicale selon la revendication 1, **caractérisée par** un dispositif de lecture (5) pour une lecture optique et/ou acoustique des signaux traités et/ou des valeurs mesurées dérivées de ceux-ci.

3. Sonde médicale selon l'une quelconque des revendications 1 ou 2, **caractérisée en ce que** le dispositif d'alimentation en énergie (4) possède une source de tension (41) et l'élément de commande (40) possède un dispositif transformateur de tension (42) qui met à disposition la tension de polarisation nécessaire du dispositif de détection (2) au moyen de la source de tension (41).

4. Sonde médicale selon l'une quelconque des revendications précédentes, **caractérisée en ce que** l'élément de commande (40) du dispositif d'alimentation en énergie (4) possède une source de tension (43) et le dispositif d'alimentation en énergie (4) possède un dispositif transformateur de tension (44) couplé à la source de tension (43) pour mettre à disposition la tension nécessaire pour le dispositif de traitement des signaux (3).

5. Sonde médicale selon l'une quelconque des revendications précédentes, **caractérisée en ce que** le dispositif d'alimentation en énergie (4) comprend une première source de tension (41) pour le dispositif de traitement des signaux (3), le dispositif de lecture (5) et le dispositif de détection (2) ; et l'élément de commande (40) du dispositif d'alimentation en énergie (4) possède une seconde source de tension (43) pour la mise à disposition de la tension de polarisation pour le dispositif de détection (2).

6. Sonde médicale selon la revendication 5, **caractérisée en ce que** la deuxième source de tension (43) affectée au dispositif de détection (2) possède un montage en série des différents éléments d'accumulateur.

7. Sonde médicale selon l'une quelconque des revendications précédentes, **caractérisée en ce que** le dispositif de détection (2) possède un cristal scintillant (21) qui est couplé de façon optique à la diode à semi-conducteur (20).

8. Sonde médicale selon l'une quelconque des revendications précédentes, **caractérisée en ce que** la diode à semi-conducteur (20) est conçue comme une diode au silicium (diode Si), comme une diode à semi-conducteur AIIIBV ou comme une diode à semi-conducteur AIIBVI.

9. Sonde médicale selon l'une quelconque des revendications précédentes, **caractérisée en ce que** le dispositif de traitement des signaux (3) possède un dispositif de discrimination électronique (30) pour les signaux du dispositif de détection (2).

10. Sonde médicale selon la revendication 9, **caractérisée en ce que** le niveau du seuil de discrimination (UT) du dispositif de discrimination électronique (30) peut être réglé

11. Sonde médicale selon la revendication 10, **caractérisée en ce que** le seuil de discrimination (UT) possède une hystérésis réglable (UTHy).

12. Sonde médicale selon l'une quelconque des revendications précédentes, **caractérisée en ce que** le dispositif de traitement des signaux (3) possède un dispositif compteur (31) pour les signaux du dispositif de détection (2) pour générer un taux de comptage.

13. Sonde médicale selon l'une quelconque des revendications 9 à 11, **caractérisée en ce que** le dispositif de traitement des signaux (3) possède un dispositif compteur (31), qui forme un taux de comptage à partir des signaux du dispositif de détection (2), qui ne sont pas effacés par le dispositif de discrimination électronique (30).

14. Sonde médicale selon l'une quelconque des revendications précédentes, **caractérisée en ce que** le dispositif de traitement des signaux (3) génère des données de mesure à partir des signaux du dispositif de détection (2), et la sonde médicale possède un dispositif de transmission (6) pour une transmission sans fil des données de mesure à partir de la sonde médicale vers un dispositif de réception externe (7).

15. Sonde médicale selon l'une quelconque des revendications précédentes, **caractérisée en ce que** la réserve d'énergie du dispositif d'alimentation en énergie (4) peut être déterminée et contrôlée automatiquement et/ou manuellement au moyen du dispositif de traitement des signaux (3).

16. Sonde médicale selon l'une quelconque des revendications précédentes, **caractérisée en ce que** le boîtier (1) possède une lumière d'admission ou une zone d'entrée (11) pour le rayonnement radioactif, la diode à semi-conducteur (20) du dispositif de détection (2) étant disposée au niveau de la lumière d'admission ou de la zone d'entrée (11).

17. Sonde médicale selon la revendication 16, **caractérisée en ce que** la sonde médicale possède un collimateur (12) entourant la lumière d'admission ou la zone d'entrée (11).

18. Sonde médicale selon l'une quelconque des revendications précédentes, **caractérisée en ce que** le boîtier (1) possède une géométrie sans contre-dépouille.

19. Sonde médicale selon l'une quelconque des revendications précédentes, **caractérisée en ce que** la surface du boîtier (1) peut être stérilisée à l'aide des procédés de stérilisation médicaux usuels.

20. Sonde médicale selon l'une quelconque des revendications précédentes, **caractérisée en ce que** le boîtier (1) est constitué d'une forme étirée en longueur de telle sorte que le boîtier (1) peut être tenu, lors de l'utilisation de la sonde médicale, comme un crayon dans la main d'un utilisateur, supporté par le dos de la main au niveau d'une zone d'appui (13) se trouvant sur le boîtier, et tenu au moins par le pouce et l'index.

21. Sonde médicale selon la revendication 20, **caractérisée en ce que** le centre de gravité de la sonde médicale est disposé le long de son axe de développement à la hauteur de la zone d'appui (13) du boîtier (1).

22. Sonde médicale selon une des revendications précédentes, **caractérisée en ce que** le boîtier montre (1) possède un dispositif de commutation (8) couplé au dispositif de traitement des signaux (3) pour commander la sonde médicale.

23. Sonde médicale selon la revendication 22, **caractérisée en ce que** le dispositif de commutation (8) possède un interrupteur à membrane (80) doté d'une feuille métallique ou en plastique.

24. Sonde médicale selon la revendication 23, **caractérisée en ce qu'**au moins un interrupteur à feuilles (80) est disposé de telle sorte que celui-ci peut être actionné avec l'index et/ou le pouce de l'utilisateur, en particulier pour mémoriser une valeur de mesure déterminée à partir d'une fonction de maintien.

25. Sonde médicale selon l'une quelconque des revendications précédentes, **caractérisée en ce que** le dispositif de traitement des signaux (3) comprend un microcontrôleur (32) pour commander le dispositif de traitement des signaux (3), pour commander et surveiller le dispositif d'alimentation en énergie (4) et pour commander le dispositif de lecture (5).

26. Sonde médicale selon l'une quelconque des revendications précédentes, **caractérisée en ce que** le dispositif de détection (2) et le dispositif de traitement des signaux (3) sont optimisés pour la détection du rayonnement radioactif dans le secteur de 5 keV à 511 keV.
